# EUROPEAN PATENT APPLICATION

(11) **EP 4 616 703 A1**
(43) Date of publication of application: **17.09.2025**
(21) Application number: 24162838.7
(22) Date of filing: 12.03.2024
(51) Int. Cl.: A01G 23/00

(54) **METHOD FOR MEASURING AND ANALYZING A FOREST AREA FOR A FORESTRY VEHICLE**

(71) Applicant: Deere & Company, Moline, IL 61265 (US)
(72) Inventor: Palmroth, Mikko, Mannheim (DE); Siltanen, Vesa, Mannheim (DE); Kaarnametsä, Johannes, Mannheim (DE)
(74) Representative: Reichert, Christian

(57) **Abstract**

The invention is a method for measuring and analyzing a forest area for a forestry vehicle, the vehicle comprising a tree detection device, adapted to be mounted to the vehicle and to detect trees in the forest area, a vehicle positioning device, adapted to be mounted on the vehicle and to detect a position and an orientation of the vehicle, wherein a forest work area is divided into homogeneous square areas or a grid, the tree detection device identifies standing trees which are assigned to the grid, so that an average tree amount or a tree density is detected, and displaying the tree amount or density on a display, wherein the display is adapted to be mounted in an operation cabin of the vehicle.

## Description

The present invention is a method to measure, evaluate and display current conditions in a forest area for a forestry vehicle.

Mobile work machines, in particular, forestry equipment and forestry machines, e.g. harvesters and forwarders, have an articulated boom and a tree stem processing tool at the tip of the boom. The tool can be e.g. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

The mobile work machines comprise an articulated boom assembly with the tool attached to a boom tip of the boom assembly. Such tools handle heavy load, that may comprise a load of soil or logs or raw material. Usually, such booms are controlled by hydraulic actuators that are driven by hydraulic pressure from one or more pumps. The pumps are usually powered by the primary power source of the vehicle.

The stem processing tool or harvester tool comprises several movable knives that are used to grab the log/tree with the harvester tool. These knives are hydraulically actuated and controlled by the controller mounted on the harvester tool. Once the tree is grabbed with the harvester tool, a saw blade, usually at a bottom side of the harvester tool, is activated to cut the tree/stem. After the cutting process the tree will fall over, only being fixated in the harvester tool by the knives closed around the stem. Usually, within the harvester tool, feeding wheels are activated to pull/push the stem through the harvester tool and the knives, so that bark/branches are removed, and the log/stem is cut up into log pieces of determined size.

The forestry vehicle may be used for thinning operations in a certain forest area. One purpose of thinning is to reduce the number of trees that are near each other. The proximity may lead to reduced growth of the trees and thus less timber generation. The trees would stagnate in growth. Thinning is based on the basal area calculation of the trees, which is a function of the tree diameters in a height of 1,3 meters above the ground in a certain working area and the overall forest area, resulting in a number that gives an indication of the available timber at that time and about the current state of the standing trees, i.e. current growth state, tree health.

Thinning may depend on the age of the standing trees in the work area, the type or specimen of trees present and the current state of the trees, i.e. damages, pest infestations, fungi infestations, relative distances of the trees with each other, different growth rate of neighboring trees.

The operator may measure the tree basal area manually and calculate the basal area index. Based on the results, the operator may manually select trees based on experience, which requires knowledge of the specimens and the possible occurring circumstances, i.e. present infestations, damage, and judgment of distances of neighboring trees. Depending on the individual operator experience, the thinning results may differ.

The thinning operation is time consuming for the operator having to leave the vehicle and process manual measurement of the trees in various terrain and weather conditions. There are also intentions to facilitate tree density measurement by drones, or small flying aircraft devices. Yet, correct measurement is often not possible, due to the foliage of the trees, branches in the fly path, terrain obstacles and weather conditions.

A thinning or tree detection system requires automatic detection of the trees in the forest area or work area and a failure detection to avoid data error.

CN103473070A describes a workflow-based forest stand operation process visualization simulating method, by taking a forest stand operation model as the leading, referring to a forest operation scheme, and combining forest stand operation practice to determine technological indexes of visualization of a forest stand operation measure.

CN109829372A describes a the thinning strategy model that first acquires some perceptual information in the trees and the environment from the image data through the perceptual sub-model, and then inputs the data obtained from the perceptual sub-model into the decision sub-model. And the decision sub-model processes the perceptual information to obtain the thinning decision.

It is an object of the present invention to overcome these disadvantages.

The invention is a method for measuring and analyzing a forest area for a forestry vehicle, the vehicle comprising a tree detection device, adapted to be mounted to the vehicle and to detect trees in the forest area, a vehicle positioning device, adapted to be mounted on the vehicle and to detect a position and an orientation of the vehicle, wherein a forest work area is divided into homogeneous square areas or a grid, the tree detection device identifies standing trees which are assigned to the grid, so that an average tree amount or a tree density is detected, and displaying the tree amount or density on a display, wherein the display is adapted to be mounted in an operation cabin of the vehicle.

The tree detection is arranged into squares or into a grid. This enables to assume a tree position which remedies position errors occurring during operation.

In another embodiment the tree detection device can be a stereo camera, or a lidar device.

The stereo camera allows positioning of the detected tree in the grid or square relative to the vehicle together with the GNSS data of the position or the heading of the vehicle.

In another embodiment the positioning device can be a GNSS device.

The GNSS device allows the use of the positioning data in subsequent map applications or further data analysis.

In another embodiment the grid can contain a counter of detections of trees or of empty squares.

The tree detection allows to place the detected number of trees to a position on the grid and accumulates the final tree number with each pass of the vehicle or with a new heading of the vehicle. If no trees are detected an empty square is recorded. This allows the allocation of the tree position into the grid which can further be handed over as data to a forest area map or enables calculation of the tree density in the forest area or a part thereof.

In another embodiment the grid can be displayed in 10 meters long and wide squares.

A 10-meter wide and long square grid is enabling the use of a stereo camera or a lidar device with a range of more than 10m and allows accurate detection results. This also allows to detect 20m wide stretches of a forest area with two adjacent forest roads. This reduces the need for additional forest roads or work roads in the forest area and reduces work time to prepare these paths or to maintain these.

In another embodiment the grid can be updated when a tree is felled by the vehicle.

The method enables to include a change of the number of trees in the grid database. Each time the vehicle is used for a felling operation the grid number are update depending on the position of the vehicle. The operator is relieved to manually enter the felled tree into the grid data.

In another embodiment the tree detection device can have a range of more than 10 meters and a field of view of at least 90 degrees.

The range of more than 10 meters allows a detection on both sides of the vehicle into a forest area and reduces the necessary work roads through that forest area. In case the cameras field of view is exceeding 90 degrees the operator can reduce the vehicle passings to detect all trees in that forest area.

In another embodiment the tree detection device can gather new tree data when the position of the vehicle changes and/or when the orientation of the vehicle changes.

In addition to the felling of a tree and the data update, the positioning system feedback triggers a new tree detection routine. When the heading changes the data is also updated by the tree detection device. This relieves the operator of a manual detection or a manual trigger. The data is compared to the previous data set and updated on the working grid if the tree number is reduced, referencing a felled tree.

The invention and its embodiments are further described in the following descriptions, whereas
Figure 1 shows a view of a common forestry vehicle, i.e. a harvester;
Figure 2 displays a tool for the vehicle, i.e. a harvester head;
Figure 3 shows an example of a forest arrangement with work roads in regular distance;
Figure 4 shows the visualization of a forest area in heat map after detection of the tree positions;
Figure 5 depict a table as a result of the analysis.

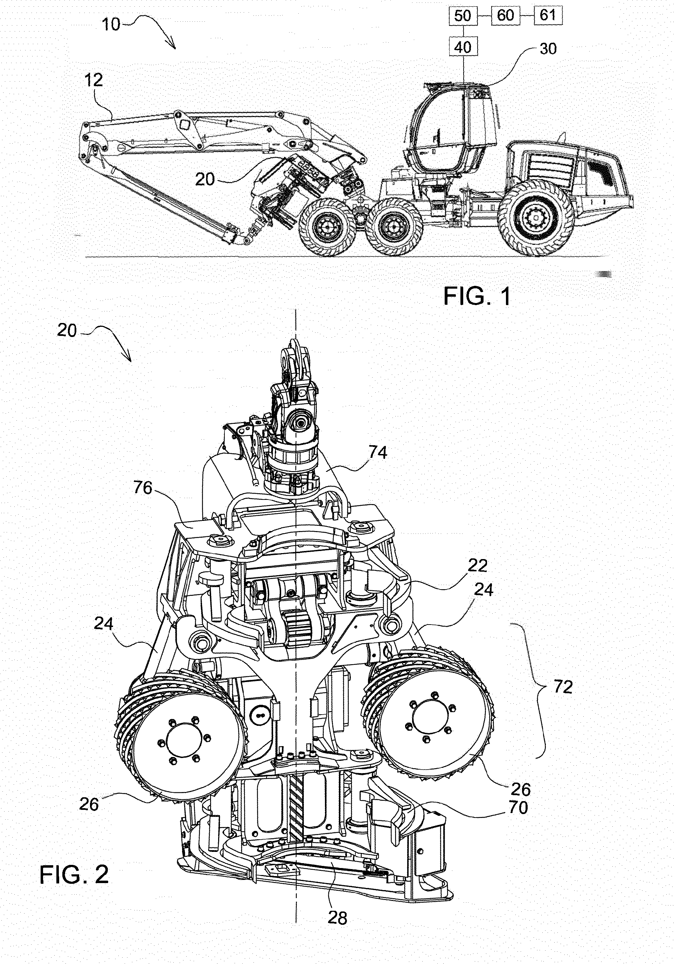

Figure 1 shows a forest harvester vehicle 10. It comprises usually of a front and rear chassis which are articulated and a driver cabin 30 for the operator. The vehicle 10 has boom assembly 12 to which a timber working device 20, e.g. a harvester head is attached. The boom assembly 12 is able to rotate and to tilt, and to extend and to rotate the timber working device 20 by the arrangement of the individual booms. For the felling and processing of a tree into logs, the operator extends and maneuvers the boom assembly 12 so that the harvester head 20 can close the upper and lower knives 22, 70 around the tree stem. The operator cuts the tree with the integrated saw blade 28 so that the stem falls over and is held at the lower end with the knives 22, 70 of the harvester head 20. In a next step the drive system 72, consisting of the feeding arms 24 holding the feeding wheels 26 is operated so that the feeding wheels 26 by their gripping surface pull or push the stem through the harvester head 20 from the upper 22 to the lower knives 70 so that the stem can be cut into logs of predetermined length, controlled by the drive system 72.

When the feeding wheels 26 transport the stem through the harvester head 20, the knives 22, 70 need to maintain a close grip to ensure the stem stays within operational parameters and is kept safely inside the harvester head 20. Also, the knives 22, 70 are used to remove branches and bark from the stem.

The shape of the stem is also an important factor in that a bend or curved shape will require a constant adaption of the grip of the knives 22, 70, leading to a longer processing time and reduced productivity. The grip may also damage the stem and reduce the wood quality.

The system comprises a tree detection device 40 that may be attached to an outside of the cabin 30 or on the vehicle 10. The tree detection device 40 can be a camera, a stereo camera or a lidar device. It is connected to a control unit 50 that may be used to give commands to the tree detection device 40, i.e. turning the device 40 or changing the settings or data feed. The tree detection device 40 is connected to a computing unit 60 which receives the data feed and computes the data to identify singular trees in the surroundings of the vehicle. The computing unit 60 is enabled identify the distance of the trees regarding the position of the vehicle 10 or the tree detection device 40. The computing unit 60 is connected to a display unit 61 inside the cabin 30 to display the information to the vehicle operator. The computing device 60 is identifying the trees and place these into a theoretical grid in the squares that reflect the position of the tree. The grid or working map will be recorded when the vehicle is moving through the forest area or the working area. This is constantly ongoing without the need of the operator to interfere with the display or to interact with the controls.

The harvester head 20 of the present invention is shown in Figure 2. It comprises a base frame 76 which is extending along a feeding axis and a movably fixed tilt bracket 74 which is attachable to the boom assembly 12 of the vehicle 10. The frame 76 contains all necessary parts and devices to ensure the operation of the harvester head 20, such as controller, hydraulic hubs, hydraulic lines, hydraulic motors, and hydraulic valves. It further comprises movable arms 24 rotatably holding the feeding wheels 26 so that these can be pushed against the stem surface. In a vertical direction, above the feeding wheels 26 are the upper knives 22 and below are the lower knives 70 which are controlled by hydraulic actuators usually but may also be controlled by electric actuators or motors. At the bottom of the frame 76 the saw blade 28 is placed below the lower knives 70.

During cutting operation, the upper and lower knives 22, 70 are closed around the stem. The harvester head 20 may only have upper 22 or lower knives 70, this does not change the operation procedure. Further, the harvester head 20 may have more than two feeding wheels 26, such as four, which also does not alter the process or use of this invention.

Upon felling of a tree, the method will automatically detect the felling operation, which can be detected by the harvester head 20 turning in a horizontal or upside-down position. When the felling is recorded, the method and the computing unit 60 updates the grid and square according to the vehicle position and reduces the number of recorded trees.

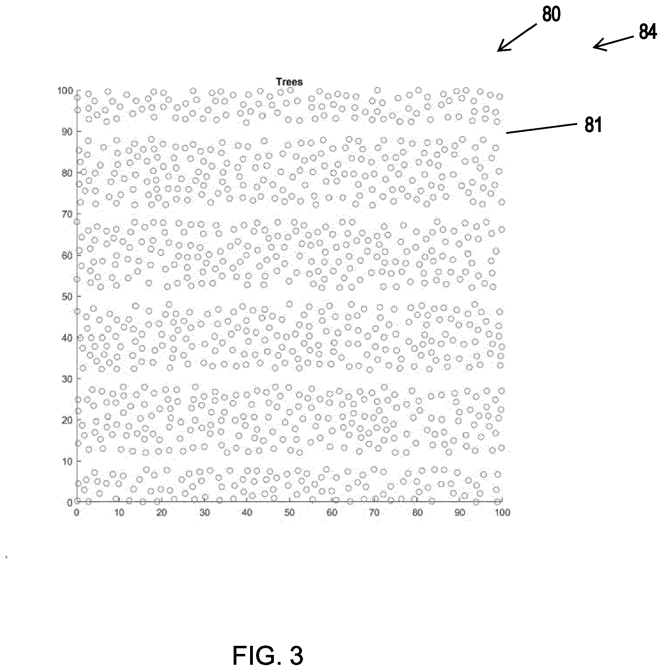

Figure 3 depicts a model of a forest area or working area 80. In the forest trees are located between forestry or working roads 81 being usually parallel to each other and enabling access to the trees. In this example, the roads distance is about 20 meters, as can be seen on the scale of the forest model 84. The forest vehicles, harvester vehicle and forwarder vehicles usually travel along these road to reach their work area and to fell or transport trees in or out of the forest area. The model 80 is an example of a real situation, where the trees are in irregular distances to each other as they are not evenly spread throughout the forest area.

The vehicle 10 is travelling along the road network 81 and the method detects the trees on both sides of the road while travelling and records the number of trees. The number is connected to the current vehicle position as well as the orientation of the tree detection device 40 and included into a theoretical grid model containing squares of 10 meters length and width.

The invention uses a tree detection device 40 which has at least a detection range of 10 meters or more. As is visible from Figure 3 the reach of the device should at least cover half the distance between two adjacent forest or work roads 81.

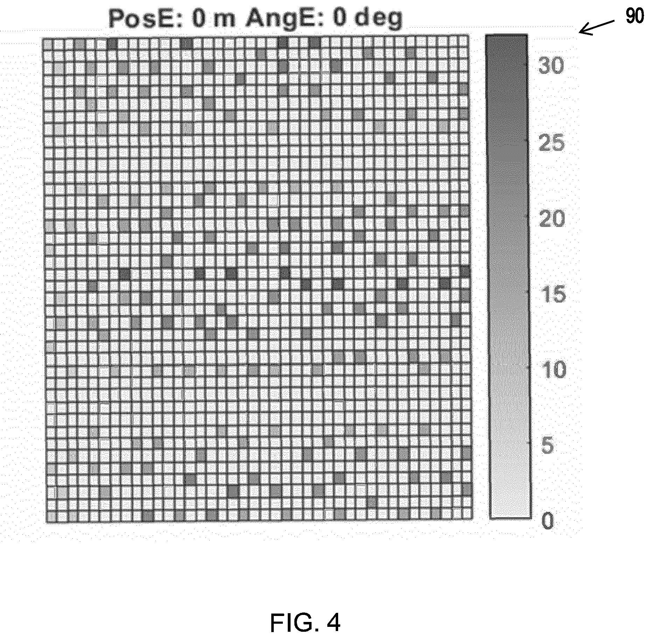

Figure 4 shows a method step 90 in the grid model, where the computing unit 60 detected the tree positions of the real situation in map 80 and calculated the results into the grid 90 in model squares of 10 meters length and width. For visualization the color depicts the tree numbers in that particular square after the computing of the model.

As can be seen in Figure 4 the method will transform the real situation into a grid model 90 with empty grid squares and squares containing multiple trees. Depending on the number of passes of the vehicles 10 along the forest roads 81 the detection rate and quality will rise.

In case a tree is felled the felling is detected by the computing unit 60 and the tree numbers in that square is updated.

A detection error of trees being allocated to a neighboring square is irrelevant as well as the failure would be mitigated in a future detection pass of the vehicle 10 or at the same time, the adjacent square will have one tree less, representing a minor positioning error but no error in the number of trees that are detected.

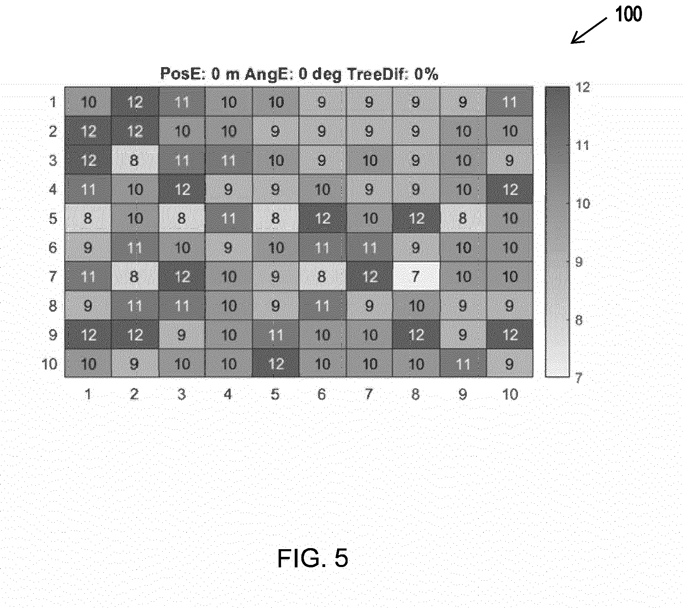

Figure 5 displays the result of the tree numbers after the calculation and correction of the computing unit 60. Each square in the table 100 represents the similar square in Figure 4 after the computing unit 60 calculated the tree numbers in each square.

The result of Figure 5 is a tree detection situation that enables the operator and the forest owner or forest customer to evaluate the tree standing condition and use this data for further analysis or combination with other data applications.

These data applications can use the results to calculate tree density and visualize the tree density on a map, possible forest timer yield and /or calculate a progress in forest work during a specific amount of time or depending on a certain number of vehicle use.

The operator is relieved from manual tree position input into a database which usually requires leaving the vehicle, measuring tree distances, defining a reference position and calculating the tree positions. The invention provides a work relieve in addition to providing a higher accuracy and better data quality of the tree positions.

## Claims

1. Method for measuring and analyzing a forest area for a forestry vehicle,
the vehicle comprising a tree detection device, adapted to be mounted to the vehicle and to detect trees in the forest area,
a vehicle positioning device, adapted to be mounted on the vehicle and to detect a position and an orientation of the vehicle,
wherein a forest work area is divided into homogeneous square areas or a grid,
the tree detection device identifies standing trees which are assigned to the grid,
so that an average tree amount or a tree density is detected, and
displaying the tree amount or density on a display, wherein the display is adapted to be mounted in an operation cabin of the vehicle.

2. Method according to claim 1, wherein the tree detection device is a stereo camera, or a lidar device.

3. Method according to any of the preceding claims, wherein the positioning device is a GNSS device.

4. Method according to any of the preceding claims, wherein the grid contains a counter of detections of trees or of empty squares.

5. Method according to any of the preceding claims, wherein the grid is displayed in 10m long and wide squares.

6. Method according to any of the preceding claims, wherein the grid is updated when a tree is felled by the vehicle.

7. Method according to any of the preceding claims, wherein the tree detection device has a range of more than 10 meters and a field of view of at least 90 degrees.

8. Method according to any of the preceding claims, wherein the tree detection device is gathering new tree data when the position of the vehicle changes and/or when the orientation of the vehicle changes.
